# EUROPEAN PATENT APPLICATION

(11) **EP 1 921 314 A1**
(43) Date of publication of application: **14.05.2008**
(21) Application number: 06767913.4
(22) Date of filing: 06.07.2006
(51) Int. Cl.: F04B 39/10

(54) **METHOD FOR PROCESSING VALVE MECHANISM CONSTITUTING MEMBER**

(30) Priority: 05.08.2005 JP 2005228922; 07.10.2005 JP 2005294985
(71) Applicant: Valeo Thermal Systems Japan Corporation, Kohnan-machi Ohsato-gun Saitama 360-0193 (JP)
(72) Inventor: TANIHARA, Hiroyuki, Ohsato-gun, Saitama 360-0193 (JP); YANAGISAWA, Kazuhiro, Ohsato-gun, Saitama 360-0193 (JP); KISO, Katsunori, Ohsato-gun, Saitama 360-0193 (JP); WATANABE, Kazuto, Ohsato-gun, Saitama 360-0193 (JP); SHINOHARA, Kenji, Ohsato-gun, Saitama 360-0193 (JP); MIZUSHIMA, Akira, Ohsato-gun, Saitama 360-0193 (JP); TOMISHIMA, Kazuki, Ohsato-gun, Saitama 360-0193 (JP); OKAWACHI, Hidehiko, Ohsato-gun, Saitama 360-0193 (JP)
(74) Representative: Sties, Jochen
(86) International application number: PCT/JP2006/313454
(87) International publication number: WO 2007/018002

(57) **Abstract**

A surface machining method to be adopted when machining a valve mechanism component member is provided so as to manufacture a product assuring a specific pulsation-reducing effect over an extended period of time with a high level of reliability. A plurality of recesses 60 are formed through laser machining over an area (seat surface 51) at a valve plate 2 around an suction port 24, which comes into contact with an suction valve 30, or an area of the suction valve 30 that comes into contact with the valve plate 2. Projections 61 may also be formed through laser machining around the recesses 60. Such projections 61 should be formed so as to assure hardness greater than the hardness of the other areas through radiation of laser light.

## Description

### TECHNICAL FIELD

The present invention relates to a method for machining a member to constitute a valve mechanism in a reciprocating compressor, and more specifically, it relates to a machining method that may be adopted over an area where a valve plate and a valve come in contact with each other.

### BACKGROUND ART

A reciprocating compressor in the related art includes a piston housed inside a cylinder at a cylinder block so as to be allowed to move reciprocally and a rear housing with a bolt fixing it to the rear of the cylinder block via a valve plate.

In the rear housing, an suction chamber and an discharge chamber are partitioned, the cylinder and the suction chamber are made to communicate with each other via an suction hole formed at the valve plate, which is opened/closed via an suction valve, and the cylinder and the discharge chamber are made to communicate with each other via an discharge hole formed at the valve plate, which is opened/closed via an discharge valve. As the pressure inside the cylinder becomes lower during an suction stroke, the difference between the pressure at the front of the suction valve and the pressure at the rear of the suction valve causes an elastic deformation of the suction valve and, as a result, the suction valve departs the seat surface around the suction hole allowing the working medium to flow into the cylinder from the suction chamber. As the pressure inside the cylinder rises during an discharge stroke, the suction valve comes into contact with the seat surface around the suction hole, the discharge valve becomes elastically deformed due to the difference between the pressure at the front of the discharge valve and the pressure at the rear of the discharge valve and the discharge valve thus departs the seat surface around the discharge hole, allowing the compressed gas in the cylinder to flow out into the discharge chamber.

Lubricating oil mist is present in the compressor and during the compression stroke, the suction hole is closed off by the suction valve with the lubricating oil adhering to the area between the valve plate and the suction valve. As the operation shifts from the compression stroke to the suction stroke subsequently, the pressure inside the cylinder is lowered, resulting in a pressure difference between the pressure at the front of the suction valve and the pressure at the rear of the suction valve. Until this pressure difference overcomes the sticking force attributable to the surface tension or the like of the lubricating oil having settled between the suction valve and the valve plate, the suction valve does not depart the valve plate and thus, the suction valve opening is delayed and bursts open. This means that there will be an unnecessarily energetic movement of the suction valve, generating a pulse in the suction gas, which, in turn, causes an unpleasant noise in the evaporator.

These issues are addressed in patent reference literature 1 by proposing a technology for eliminating the stickiness attributable to the lubricating oil between the suction valve and the valve plate by roughening the surface of the valve plate over the area that comes in contact with the suction valve. Patent reference literature 2 discloses a method of transferring recesses and projections formed at the front end of a punch die onto the valve plate surface by pressing the punch die to an area around an suction port.
Patent reference literature 1: Japanese Unexamined Patent Publication No. H3-194174
Patent reference literature 2: Japanese Examined Patent Publication No. 2002-066832

### DISCLOSURE OF THE INVENTION

### PROBLEMS TO BE SOLVED BY THE INVENTION

While the valve plate surface is roughened in the first method through shot blasting or the like, the shot blasting method requires a washing process to be executed so as to ensure that no shot grains remain on the valve plate surface. There is an added concern that the roughened surface will become worn after an extended period of use and that eventually, the initial pulsation-reducing effect becomes totally lost.

While the latter method allows recesses and projections to be formed without having to worry about any residual shot grains, the shapes of the recesses and projections are limited to those that can be formed through press molding and thus, subtle and minute shapes cannot be formed through this method. Furthermore, since the punch die is bound to become worn as it is repeatedly used in the production process, the dimensions of the transferred recesses and projections will change. In other words, the punch die must be inspected and replaced frequently in order to provide a product that assures a specific pulsation-reducing effect with a high level of reliability.

The primary object of the present invention, having been completed by addressing the issues discussed above, is to provide a method for machining a valve mechanism component member, through which a product assuring a specific pulsation-reducing effect with a high level of reliability can be provided and the desired pulsation-reducing effect can be maintained over an extended period of time. Another object of the present invention is to provide a machining method through which a subtle and minute shape can be formed with ease without leaving any residual processing medium.

### MEANS FOR SOLVING THE PROBLEMS

The objects described above are achieved in the present invention by providing a method for machining a valve mechanism component member to constitute at least either an suction-side valve mechanism made up with a valve hole formed at a valve plate inserted between a cylinder block in which a cylinder with a piston sliding reciprocally therein is formed and a housing in which an suction chamber and then discharge chamber are formed and communicating between the suction chamber and the cylinder and a valve that opens/closes the valve hole or an discharge-side valve mechanism made up with a valve hole formed at the valve plate and communicating between the cylinder and the discharge chamber and a valve that opens/closes the valve hole. The machining method is characterized in that a plurality of recesses are formed through laser machining over an area of the valve plate around the valve hole which comes in contact with the valve or over an area of the valve that comes into contact with the valve plate (claim 1).

The compressor may be a variable capacity compressor with a single-ended piston made to slide reciprocally via a swashplate with a variable tilt angle relative to the drive shaft, or a fixed capacity-type compressor with a double ended piston made to slide reciprocally via a swashplate with a fixed tilt angle relative to the drive shaft.
Since a plurality of recesses are formed through laser machining over an area of the valve plate around the valve hole that comes in contact with the valve or over an area of the valve that comes in contact with the valve plate, any fine recessed shape can always be formed with a high level of accuracy without leaving any processing medium behind and, as a result, the desired valve departing characteristics can be reliably achieved.

In addition, projections may be formed around the recesses through the laser machining (claim 2). While a recess is formed through laser machining by melting the material and thus evaporating and splashing the material over the area where the recess is formed, the splashed material tends to settle and solidify over an area around the recess. Accordingly, by specially forming protections around the recesses while forming the recesses through the laser machining, the contact surface area where the valve and the valve plate come into contact with each other can be further reduced, which, in turn, allows the valve to depart the valve plate with greater ease.

When forming such projections, it is desirable to achieve a higher level of hardness for the projections relative to the hardness in the other areas by adjusting the hardness of the projections through laser light radiation (claim 3).

The hardness of the projections may be adjusted by controlling the quantity of energy provided through the laser light during the laser machining (claim 4). More specifically, the hardness of the projections may be adjusted by controlling at least one of; the laser light output, the scan speed and the number of radiation treatments executed during the laser machining process (claim 5). Alternatively, after the projections are formed, the hardness of the projections may be adjusted by radiating laser light onto the projections using an energy quantity lower than the level of the energy provided via the laser light during the laser machining process (claim 6).

While the former adjustment method (achieved by controlling the quantity of energy provided via the laser light) is effective when a higher level of hardness is to be achieved at the projections, the latter adjustment method (achieved by irradiating the projections with the laser light a second time using an energy quantity lower than the energy level of the light used in the machining process) is effective when the hardness of the projections, having become excessively high, must be lowered through annealing.

### EFFECT OF THE INVENTION

As described above, according to the present invention disclosed in claim 1, a plurality of recesses are formed through a laser machining process over an area of the valve plate around the valve hole that comes in contact with the valve or over an area of the valve that comes in contact with the valve plate at least either at the suction-side valve mechanism or the discharge-side valve mechanism. As a result, any fine recessed shape can always be formed with a high level of accuracy without leaving any processing medium behind and the desired valve departing characteristics can be reliably achieved. These, in turn, allow the pulsation-reducing effect to be maintained over an extended period of time.

According to the present invention disclosed in claim 2, projections are formed around the recesses through laser machining and, as a result, the contact area where the valve and the valve plate come into contact with each other can be further reduced, to further improve the valve departing characteristics. In addition, since the recesses and the projections are formed through laser machining, the characteristics remain unchanged by factors such as the wear of a punch die, assuring a stable pulsation-reducing effect.

According to the present invention disclosed in claim 3, the hardness of the projections is adjusted to a level higher than the hardness at the other areas through laser light radiation. The extent of subsequent wear of the projections can thus be minimized and a stable pulsation-reducing effect can be provided over an extended period of time.

The hardness of the projections may be adjusted by controlling the quantity of energy provided in the laser light during the laser machining process and, more specifically, by controlling at least one of; the laser light output, the scan speed and the number of radiation treatments executed during the laser machining process. Through these measures, the hardness of the projections can be adjusted without having to execute a special process. In addition, if the projections become too hard, they may be irradiated again with laser light at an energy quantity lower than that used in the projection forming process, so as to reduce the hardness through annealing.

### BRIEF DESCRIPTION OF THE DRAWINGS

FIG. 1 is a sectional view of a reciprocating compressor;
FIG. 2 is an exploded perspective showing the members disposed between the cylinder block and the rear housing;
FIG. 3(a) shows the suction valve sheet, FIG. 3(b) shows the valve plate and FIG. 3(c) shows the discharge valve sheet;
FIG. 4 illustrates an area around an suction hole formed at the valve plate;
FIG. 5 illustrates how the areas around the suction holes at the valve plates are machined with a laser machining device;
FIG. 6 presents an example of recesses formed over an area (seat surface) around an suction hole that comes in contact with an suction valve, with FIG. 6 (a) showing the area around the suction hole in a plan view and FIG. 6(b) presenting a sectional view taken through A-A in FIG. 6(a);
FIG. 7 presents a chart of the relationship of the laser light scan speed and the number of turns to the peak height and the hardness achieved at the projections;
FIG. 8 presents a diagram of the relationship between the projection peak height and the hardness;
FIG. 9 presents another example of recesses formed over an area (seat surface) around an suction hole that comes in contact with an suction valve, with FIG. 9(a) showing the area around the suction hole in a plan view and FIG. 9(b) presenting a sectional view taken through B-B in FIG. 9(a);
FIG. 10 presents yet another example of recesses formed over an area (seat surface) around an suction hole that comes in contact with an suction valve, with FIG. 10(a) showing the area around the suction hole in a plan view and FIG. 10(b) presenting a sectional view taken through C-C in FIG. 10(a); and
FIG. 11 presents yet another example of recesses formed over an area (seat surface) around an suction hole that comes in contact with an suction valve, with FIG. 11(a) showing the area around the suction hole in a plan view and FIG. 11(b) presenting a sectional view taken through D-D in FIG. 11 (a).

### EXPLANATION OF REFERENCE NUMERALS

- 2: cylinder block
- 3: rear housing
- 11: cylinder
- 12: piston
- 22: suction chamber
- 23: discharge chamber
- 24: suction hole
- 25: discharge hole
- 30: suction valve
- 31: discharge valve
- 51: seat surface
- 60, 62, 64, 66: recess
- 61, 63, 65, 67: projection

### BEST MODE FOR CARRYING OUT THE INVENTION

The following is an explanation of the best mode for carrying out the invention, given in reference to the attached drawings.

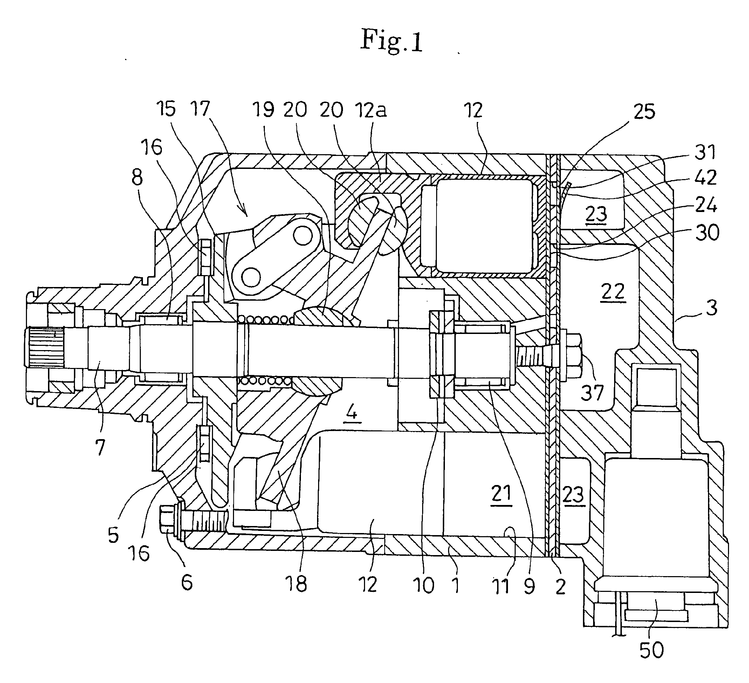

Embodiments of the present invention are now described in reference to drawings. FIG. 1 shows a reciprocating compressor adopting the valve mechanism according to the present invention. This reciprocating compressor comprises a cylinder block 1, a rear housing 3 attached to the rear side of the cylinder block 1 via a valve plate 2 and a front housing 5 attached so as to encase the cylinder block 1 and define a crankcase 4 on the front side of the cylinder block 1. The front housing 5, the cylinder block 1, the valve plate 2 and the rear housing 3 are fastened together along the axial direction with fastening bolts 6.

The crankcase 4 defined by the front housing 5 and the cylinder block 1 houses therein a drive shaft 7, one end of which projects out from the front housing 5. The one end of the drive shaft 7 is rotatably supported at the front housing 5 via a radial bearing 8, whereas the other end of the drive shaft 7 is rotatably supported at the cylinder block 1 via a radial bearing 9 and a thrust bearing 10.

At the cylinder block 1, a plurality of cylinders 11 are formed with specific intervals along the circumferential direction around the drive shaft 7, with a piston 12 slidably inserted in each cylinder 11.

A thrust flange 15, which rotates as one with the drive shaft 7 is fixed to the drive shaft 7 in the crankcase 4. The thrust flange 15 is rotatably supported via a thrust bearing 16 at the inner wall surface of the front housing 5 ranging substantially perpendicular to the drive shaft 7. A swashplate 18 is linked to the thrust flange 15 via a link member 17.

The swashplate 18, tiltably held via a hinge ball 19 disposed on the drive shaft 7, is caused to rotate as one with the thrust flange 15 in synchronization with the rotation of the thrust flange 15. An engaging portion 12a of the piston 12 is held at the edge of the swashplate 17 via a pair of shoes 20 holding the engaging portion between them.

Thus, as the drive shaft 7 rotates, the swashplate 18 also rotates and the rotating motion of the swashplate 18 is converted via the shoes 20 to reciprocal linear motion of the piston 12, thereby altering the volumetric capacity of a compression space 21 defined between the piston 12 and the valve plate 2 inside the cylinder 11.

At the rear housing 3, an suction chamber 22 and discharge chambers 23 disposed around the suction chamber 22 are defined, with the suction chamber 22 connected to a low-pressure line in a refrigerating cycle via an suction passage (not shown) and the discharge chambers 23 each connected to a high-pressure line in the refrigerating cycle via an discharge passage (not shown).

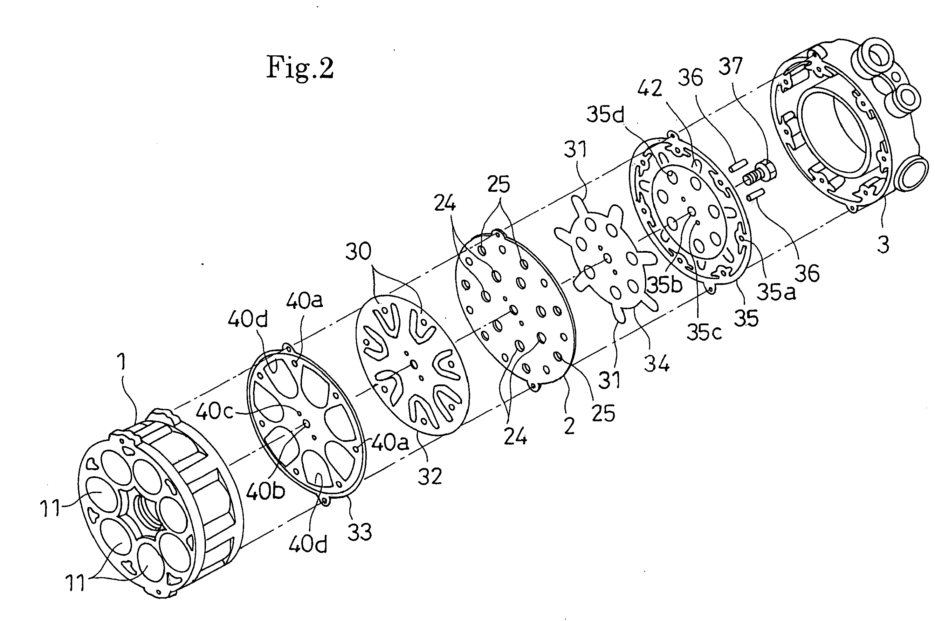

An suction valve sheet 32 is laid onto an end surface of the valve plate 2 toward the cylinder block 1, and the cylinder block 1 is set on the suction valve sheet 32 via a gasket 33, as shown in FIG. 2. An discharge valve sheet 34 is laid on an end surface of the valve plate 2 toward the rear housing and the rear housing 3 is set on the discharge valve sheet 34 via a gasket 35. The cylinder block 1, the gasket 33, the suction valve sheet 32, the valve plate 2, the discharge valve sheet 34 and the gasket 35 are positioned via positioning pins 36 and locked together with a bolt 37, which interlocks with the cylinder block 1 so as to press them against each other.

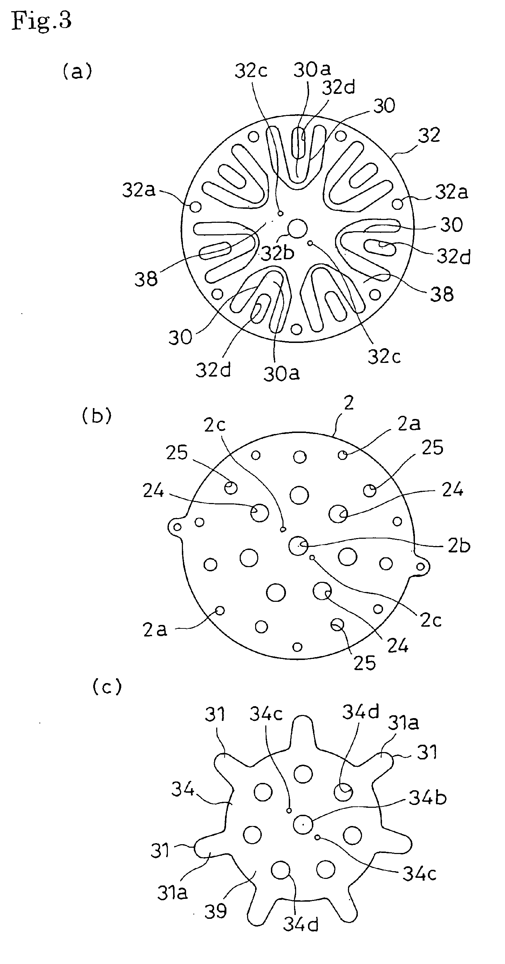

As shown in FIG. 3(b), suction ports 24 each communicating between the suction chamber 22 and a cylinder 11 (compression space 21) and opened/closed by an suction valve 30 to be detailed later and discharge ports 25 each communicating between an discharge chamber 23 and a cylinder 11 (compression space) 21 and opened/closed by an discharge valve 31 to be detailed later are formed over predetermined intervals along the circumferential direction at the valve plate 2. In addition, holes 2a and 2b at which the bolts 6 and 37 are inserted and holes 2c at which the positioning pins 36 are inserted are formed at the valve plate 2.

As shown in FIG. 3(a), at the suction valve sheet 32, constituted with a group of suction valves 30 which open/close the suction ports 24, the suction valves 30, the number of which matches the number of the cylinders 11, are formed along the circumferential direction over specific intervals, as well as holes 32a and 32b at which the bolts 6 and 37 are inserted and holes 32c at which the positioning pins 36 are inserted. In addition, at the base of each suction valve 30, a passing hole 32d is formed to disallow any interference with an discharge port 25.

The suction valves 30 are each constituted with part of the suction valve sheet 32 and they are formed near the circumferential edge of a connecting area 38 ranging around the suction valves and connecting adjacent suction valves to each other. The suction valves range inward along the radial direction. The suction valves 30 are cantilevered lead valves. At the front end of the deformation area of each suction valve, a seat portion 30a to become seated on a seat surface formed around the corresponding suction port 24 is formed.

As shown in FIG. 3(c), at the discharge valve sheet 34, constituted with a group of discharge valves 31 which open/ close the discharge ports 25, the discharge valves 31, the number of which matches the number of the cylinders 11, are formed along the circumferential direction over specific intervals, as well as a hole 34b at which the bolt 37 is inserted and holes 34c at which the positioning pins 36 are inserted, and passing holes 34d formed to disallow interference with the suction ports 24.

The discharge valves 31are each constituted with part of the discharge valve sheet 34 and they are formed near the circumferential edge of a connecting area 39 connecting adjacent discharge valves to each other. The discharge valves range outward along the radial direction. The discharge valves 31, too, are cantilevered lead valves. At the front end of the deformation area of each suction valve, a seat portion 31a to become seated on a seat surface formed around the corresponding discharge port 25 is formed.

At the gasket 33 disposed between the suction valve sheet 32 and the cylinder block 1, passing holes 40d, the number of which matches the number of cylinders 11, are formed over predetermined intervals along the circumferential direction so as to disallow interference with the cylinders 11 in addition to holes 40a and 40b at which the bolts 6 and 37 are inserted and holes 40c at which the positioning pins 36 are inserted. At the gasket 35 disposed between the discharge valve sheet 34 and the rear housing 3, passing holes 35d disallowing interference with the suction ports 24 and retainers 42 at which the discharge valves 31 are received are formed over predetermined intervals along the circumferential direction, in addition to holes 35a and 35b at which the bolts 6 and 37 are inserted and holes 35c at which the positioning pins 36 are inserted. It is to be noted that reference numeral 50 indicates a pressure control valve that controls the piston stroke, i.e., the discharge capacity, by adjusting the crankcase pressure.

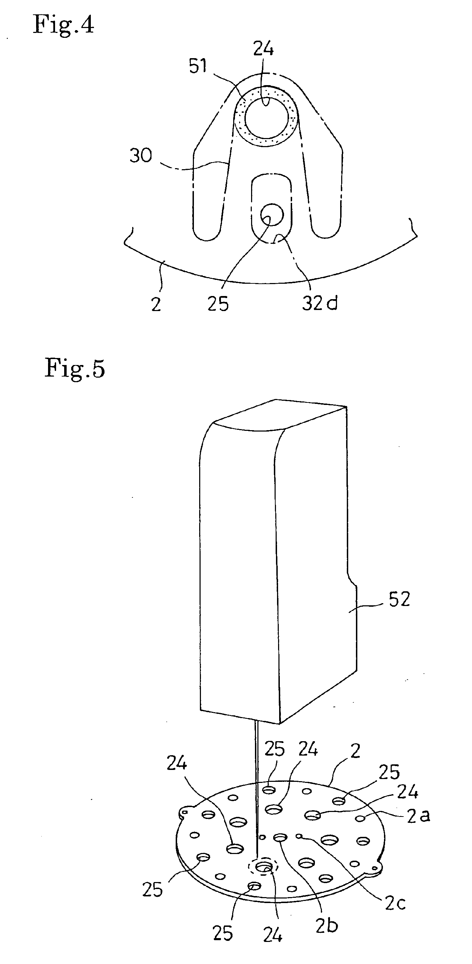

In this reciprocating compressor, a seat surface 51 assuming the shape of a ring with a predetermined width which comes in contact with an suction valve 30, is formed over the area around each suction port 24 at the valve plate 2, and a plurality of recesses are formed at the seat surface 51 through laser light radiation (through laser machining) by a laser machining device 52, as shown in FIG. 5.

No particular restrictions are imposed with regard to the laser machining device 52, which may be a laser marker or the like in the related art that alters via a galvanoscanner the direction of a laser beam emitted from a laser oscillator and directs the laser beam onto the machining target material via a condenser lens so as to evaporate and splash the material surface over a desired area through fusion. Such a laser machining device forms recesses such as those over the area (the seat surface 51) around the suction port 24 at the valve plate 2.

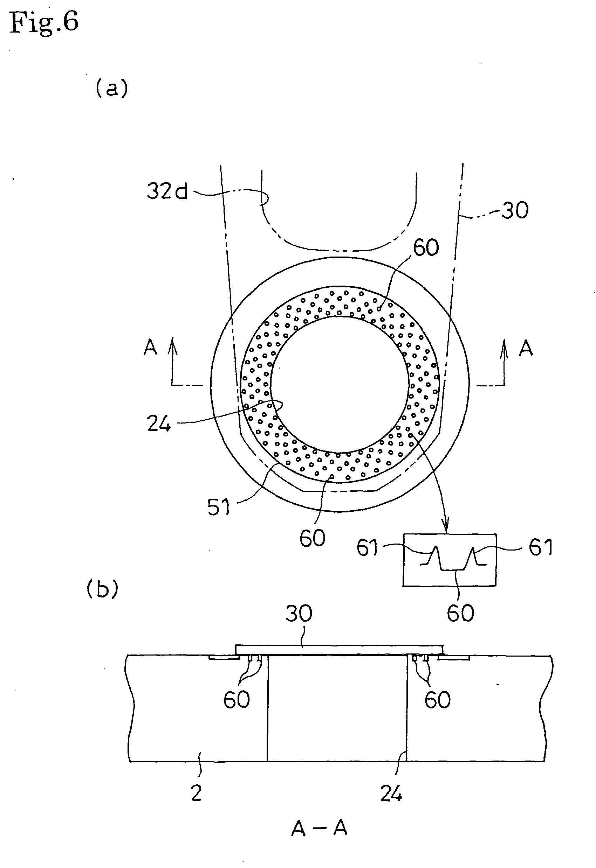

In the example of recess formation presented in FIG. 6, dot-like recesses 60 are formed at a predetermined density over the seat surface 51 formed at the valve plate 2 around each suction port 24, which comes in contact with an suction valve 30, and thus, numerous recesses are formed around the suction port 24. The individual recesses 60 can be formed by, for instance, repeating a plurality of times a process of rotationally scanning the target area with the position of laser light with a beam diameter smaller than the diameter of the recesses in sequence, from the center toward the outside.

As a recess is formed with laser light radiated onto the material during a laser machining process, the irradiated area often becomes fused to result in evaporation and splashing of the material. The splashed material then typically adheres onto and solidifies in the area around the recess. Projections 61 may be intentionally formed around the recesses 60 by taking advantage of this phenomenon, or the material having adhered onto and solidified in the areas around the recesses may be removed through a post process.

When intentionally forming the projections 61, which are formed while forming the recesses 60, around the recesses 60, the peak height and hardness of the projections 61 are controlled by adjusting laser light transmission scan speed or the number of times (the number of turns) the processing sequence of scanning the target area with the laser light with its position sequentially shifted from the inside toward the outside.

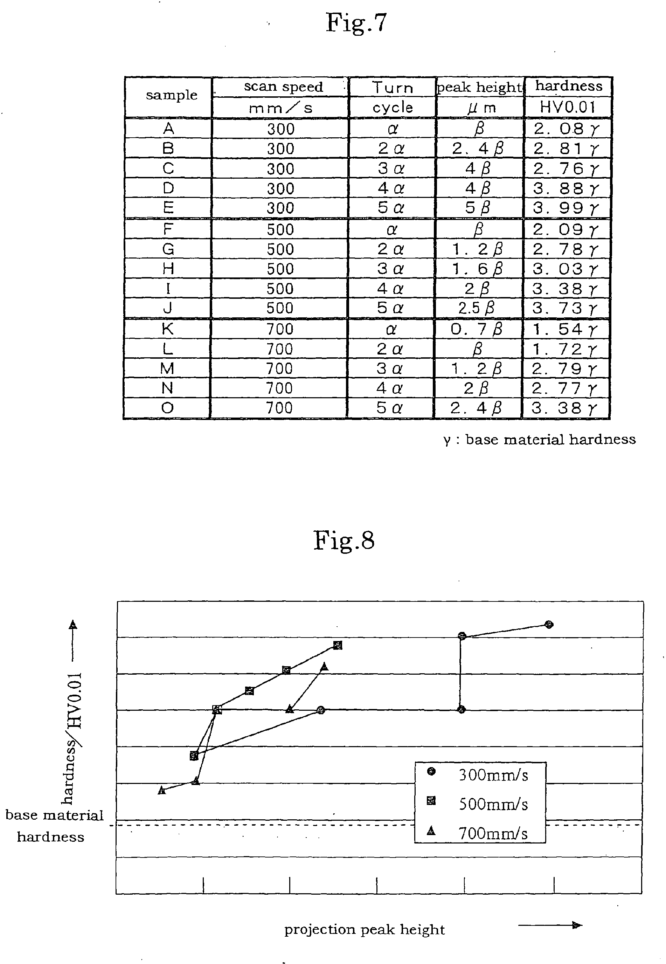

FIG. 7 shows a relationship of the laser light transmission speed and the number of turns to the recess peak height and hardness, observed by adjusting the laser light transmission speed in the number of turns. The term "turn" in this context refers to the number of times the processing sequence is executed repeatedly and α represents the minimum number of repetitions used as a reference for recess formation. In addition, β represents the peak height achieved by setting the scan speed to 300 mm/ s and the number of turns to α, and the peak height of each sample is indicated as a multiple of β. The hardness is indicated as a multiple of y, which is the hardness of the base material constituting the valve plate 2 and used as a reference hardness.

As the chart indicates, a greater projection peak height and a higher level of hardness are achieved when the scan speed is lower even with a small number of turns. In addition, regardless of the scan speed, a greater projection peak height and a higher level of hardness are achieved when the number of turns is greater. Furthermore, the hardness of the projections is higher than the hardness in the other areas of the valve plate 2 and, as indicated in FIG. 8, the hardness tends to increase as the peak height of the projections 61 increases. Thus, even when radiating laser light with a uniform energy level and a uniform beam diameter, the peak height and hardness of the projections 61 can be adjusted by controlling the scan speed and the number of turns during the formation of the recesses 60, so as to form the projections 61 achieving the desired height and hardness. It is to be noted that the hardness of the projections 61 can be adjusted by controlling the level (quantity) of energy provided via the laser light during the laser machining process, by adopting a method other than that described above. Namely, the hardness of the projections can be adjusted to the desired level by controlling at least one of; the laser light output, the scan speed and the number of radiation treatments executed during the laser machining process.

In addition, it is desirable to determine the hardness of the projections by taking into consideration the required durability of the suction valves 30 since excessive hardness of the projections 61 will result in significant shock to the suction valves 30 coming into contact with the projections 61. For this reason, if the projections 61 are too hard, they may be irradiated a second time with laser light at a lower energy level than that provided in the initial formation of the recesses 60 and the projections 61 so as to lower the hardness of the projections 61 to an optimal level through annealing.

With the plurality of recesses 60 formed through laser machining over the area (at the seat surface 51) around each suction port 24, which comes in contact with an suction valve 30, the area over which the suction valve 30 and the valve plate 2 contact each other via the lubricating oil is reduced. This, in turn, allows the suction valve 30 to depart the valve plate readily during the suction stroke and consequently, unpleasant noise occurring on the evaporator-side can be reduced by inhibiting pulsation of the suction gas caused as the suction valve 30 enters an open state with a delay.

Since the recesses 60 are formed through laser machining, any minute recessed shape can be formed with a high degree of accuracy without leaving any residual processing medium and a product assuring a specific pulsation-reducing effect with a high level of reliability can always be provided. Furthermore, the pulsation-reducing effect can be maintained over an extended period of time.

In addition, with the hardness-adjusted projections 61 formed around the recesses 60, the contact surface area over which the suction valve 30 and the valve plate 2 come into contact with each other can be further reduced, allowing the suction valve 30 to depart the valve plate 2 more smoothly during the suction stroke. Since the hardness of the projections 61 can be adjusted to an optimal level by selecting specific settings for the laser light used in the recess formation or by radiating laser light again, the projections do not wear as quickly as those formed with a punch die, assuring a stable pulsation-reducing effect over a long period of time. Moreover, a high level of durability is assured for the suction valve 30.

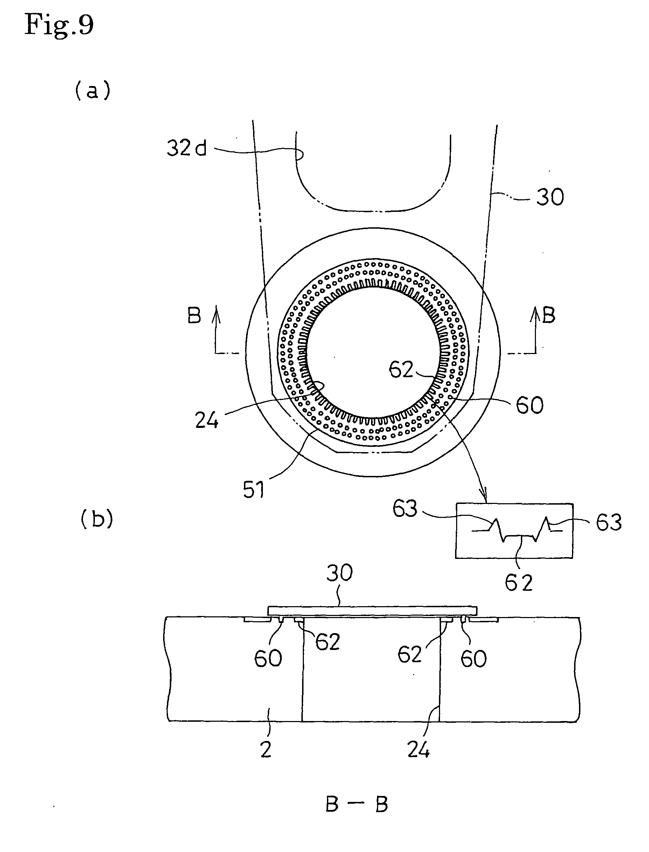

FIG. 9 presents another example of a recess formation pattern.
In this example, numerous slit-shaped recesses 62 extending along the radial direction are formed over predetermined intervals along the circumferential direction at the edge (the inner edge of the seat surface 51) of the suction port 24 and numerous dot-shaped recesses 60 are formed with a predetermined density further outward relative to the slit-shaped recesses toward the outer edge of the seat surface 51 at the area (seat surface 51) around the suction port 24 at the valve plate 2, which comes in contact with the suction valve 30.

The individual slit-shaped recesses 62 and dot-shaped recesses 60 can be formed by, for instance, repeating a plurality of times a process of scanning the target area with the position of laser light with a beam diameter smaller than the width and the diameter of the recesses in sequence, from the center toward the outside. As in the previous example, projections 61 and 63 may be intentionally formed around the recesses 60 and 62, or the material having adhered onto and solidified in the areas around the recesses may be removed through a post process.
It is to be noted that the same reference numerals are assigned to structural elements identical to those in the previous example so as to preclude the necessity for a repeated explanation thereof.

In addition to achieving the advantages of the previous example, the structure described above also effectively prevents the contact surface from becoming flattened even after the suction valve 30 repeatedly comes into contact with the area around the suction port 24. Namely, since the area near the circumferential edge of the suction port 24 is subjected to the highest level of force as the suction valve 30 comes into contact with the seat surface 51 and thus this area would become worn faster than the other areas, it is necessary to buffer the area that comes in contact with the suction valve 30 so as to prevent flattening of the area. The presence of the numerous slit-shaped recesses 62 extending near the circumferential edge of the suction port 24 along the radial direction, disposed along the circumferential direction in the structure described above assures reliable buffering of the area that comes into contact with the suction valve 30 so as to effectively prevent flattening of the circumferential edge of the suction hole.

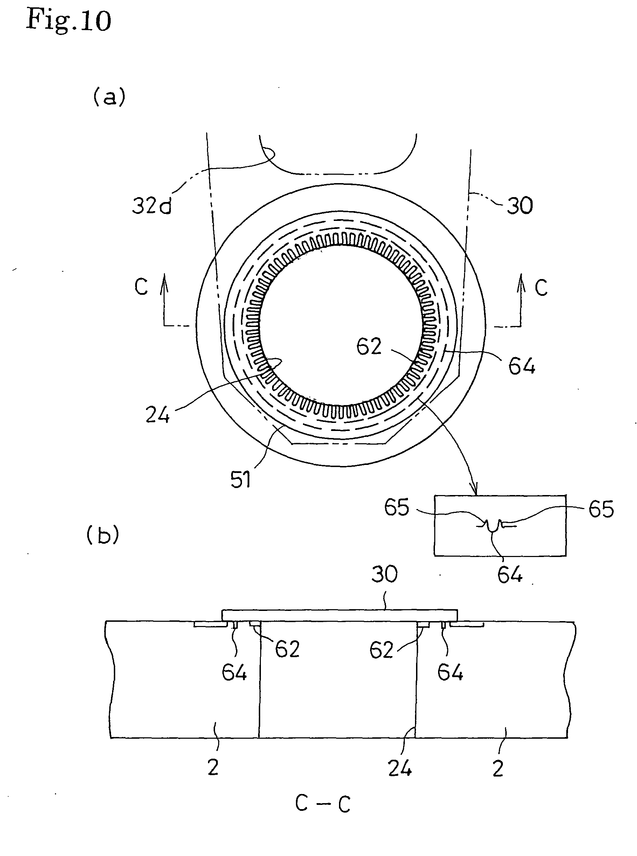

FIG. 10 presents yet another example of a recess-formation pattern.
In this example, numerous slit-shaped recesses 62 extending along the radial direction are formed over predetermined intervals along the circumferential direction at the edge (the inner edge of the seat surface 51) of the suction port 24 and numerous groove-shaped recesses 64 constituted of narrow grooves extending along the circumferential direction are formed around the slit-shaped recesses both along the circumferential direction and the radial direction.

The individual groove-shaped recesses 64 and the slit-shaped recesses 62 can be formed by, for instance, repeating a plurality of times a process of scanning the target area with the position of laser light with a beam diameter smaller than the width of the recesses in sequence, from the center toward the outside. As in the previous examples, projections 63 and 65 may be intentionally formed around the recesses 62 and 64, or the material having adhered onto and solidified in the areas around the recesses may be removed through a post process.
It is to be noted that the same reference numerals are assigned to structural elements identical to those in the previous example so as to preclude the necessity for a repeated explanation thereof.

The structure described above, too, achieves advantages similar to those of the previous example. The narrow groove-shaped recesses 64, in particular, cannot be formed readily simply by transferring recesses with a punch die. In other words, the shape of the narrow grooves is a special shape that can be achieved through laser machining alone. By adjusting the width, the length, the shape and the like of these groove-shaped recesses 64, the departing characteristics and the durability of the suction valve 30 can be controlled.

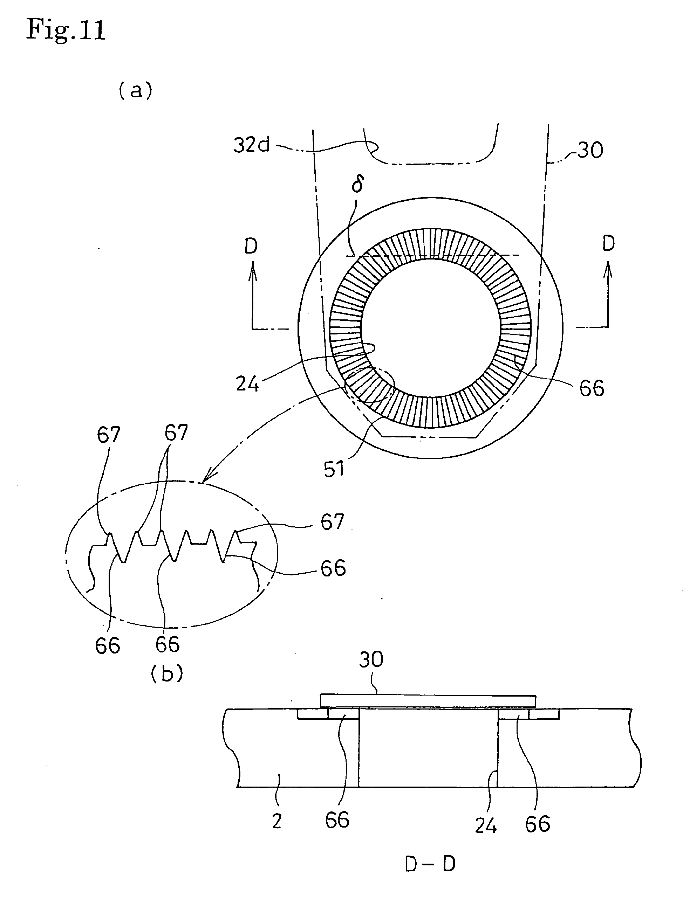

FIG. 11 presents yet another example of a recess-formation pattern.
In this example, numerous slit-shaped recesses 66 extending along the radial direction (radiating direction) from the inner circumference to the outer circumference are formed with predetermined intervals along the circumferential direction over the area (seat surface 51) around the suction port 24 at the valve plate 2, which comes in contact with an suction valve 30.

The individual slit-shaped recesses 66 can be formed by, for instance, repeating a plurality of times a process of scanning the target area with the position of laser light with a beam diameter substantially equal to the width of the recesses in sequence, from the center toward the outside. As in the previous examples, projections 67 may be intentionally formed around the recesses 66, or the material having adhered onto and solidified in the areas around the recesses may be removed through a post process.
It is to be noted that the same reference numerals are assigned to structural elements identical to those in the previous example so as to preclude the necessity for a repeated explanation thereof.

The recesses 66 in this structure extend linearly from the inner side toward the outer side of the seat surface 51, stabilizing the accuracy with which the recesses 66 are formed. In particular, while the projections 67, which come in contact with the suction valve 30, must be formed in a specific shape with a high level of reliability, the simple linear shape of the recesses 66 in this structure allows the projections 67 to be formed in the desired shape with a high level of reliability. Furthermore, even if the individual recesses 66 formed along the radial direction are slightly off-center, the performance is hardly affected by the off-centered recesses 66, which are formed to extend from the inner circumferential edge toward the outer circumferential edge over the area (seat surface 51) around the suction port 24. However, if any off-centering occurs in the structure shown in FIG. 9 or FIG. 10, the slit-shaped recesses 62 and the dot-shaped recesses 60 or the groove shaped recesses 64 around the slit-shaped recesses will be formed asymmetrically, which is bound to adversely affect the performance. In other words, since the structure achieved in this example does not require very rigorous centering control, the machining work can be executed with greater ease.

In addition, since the structure described above can be achieved by simply forming linear recesses 66, the length of machining time can be reduced. Furthermore, following the machining process, the machining results can be inspected through measurement to assess both the machined state on the inside and the machined state on the outside through a single measurement operation executed by measuring any straight line (e.g., a straight-line δ indicated by the dotted line in the figure) extending from the inner edge toward the outer edge along which the recesses are formed.

It is to be noted that while the recesses and the projections are formed through laser machining over the area (seat surface 51) around each suction port 24 at the valve plate 2 in the examples described above, a plurality of recesses and projections may instead be formed through laser machining over an area at the suction valve 30 that comes into contact with the valve plate 2. In addition, while an explanation has been given above in reference to the examples by describing the suction-side valve mechanism, the departing characteristics of the discharge valves may be improved with a plurality of recesses and projections formed through laser machining at the discharge-side valve mechanism, constituted with the discharge holes 25 formed at the valve plate 2 and the discharge valves 31 that open/close the discharge holes 25. Namely, a plurality of recesses and projections may be formed through laser machining around each discharge hole 25 over an area at the valve plate 2, which comes in contact with an discharge valve 31, or an area of each discharge valve 31 which comes into contact with the valve plate 2.
In addition, while an explanation is given above in reference to the embodiments on an example in which the present invention is adopted in a variable-capacity compressor, it may be adopted equally effectively in other types of compressors in which lead valves are used, such as a fixed-capacity compressor having pistons (single-ended pistons or double ended pistons) caused to slide reciprocally via a swashplate, the tilt angle of which relative to the drive shaft is fixed.

## Claims

1. A method for machining a valve mechanism component member to constitute at least either an suction-side valve mechanism made up with a valve hole formed at a valve plate (2) inserted between a cylinder block (1) in which a cylinder (11) with a piston (12) sliding reciprocally therein is formed and a housing in which an suction chamber (22) and an discharge chamber (23) are formed and communicating between said suction chamber (22) and said cylinder (11) and a valve that opens/closes said valve hole, or an discharge-side valve mechanism made up with a valve hole formed at said valve plate (2) and communicating between said cylinder (11) and said discharge chamber (23) and a valve that opens/closes said valve hole, **characterized in:**
**that** a plurality of recesses (60, 62, 64, 66) are formed through laser machining over an area of said valve plate (2) around said valve hole that comes in contact with said valve or over an area of said valve that comes into contact with said valve plate (2).

2. A method for machining a valve mechanism component member according to claim 1, **characterized in:**
**that** projections (61, 63, 65, 67) are formed around said recesses (60, 62, 64, 66) through said laser machining.

3. A method for machining a valve mechanism component member according to claim 2, **characterized in:**
**that** the hardness of said projections (61, 63, 65, 67) is adjusted to be greater than other areas through laser light radiation.

4. A method for machining a valve mechanism component member according to claim 3, **characterized in:**
**that** the hardness of said projections (61, 63, 65, 67) is adjusted by controlling the quantity of energy provided through the laser light during said laser machining.

5. A method for machining a valve mechanism component member according to claim 4, **characterized in:**
**that** the quantity of energy provided via the laser light is adjusted by controlling at least one of; the laser light output, the scan speed and the number of radiation treatments executed during said laser machining.

6. A method for machining a valve mechanism component member according to claim 3, **characterized in:**
**that** the hardness of said projections (61, 63, 65, 67) is adjusted by radiating laser light using an energy quantity lower than the level of the energy provided via the laser light during said laser machining process onto said projections (61, 63, 65, 67) after said projection (61, 63, 65, 67) is formed.
